# EUROPEAN PATENT APPLICATION

(11) **EP 4 509 201 A1**
(43) Date of publication of application: **19.02.2025**
(21) Application number: 23191331.0
(22) Date of filing: 14.08.2023
(51) Int. Cl.: B01D 46/24

(54) **FILTER ASSEMBLY**

(71) Applicant: Plurifilter d.o.o., 1370 Logatec (SI)
(72) Inventor: Jakop, Janez, 1370 Logatec (SI)
(74) Representative: Murgitroyd & Company

(57) **Abstract**

A filter assembly (100) for filtering a fluid is disclosed. The filter assembly (100) comprises a filter element (110) with an end cap (120), the end cap (120) being configured for guiding the fluid to the filter element (110) and positioning (holding) the filter (100) in a housing (200). The end cap (120) comprises a first part (122) and a second part (124) releasably connectable to each other by an interlocking mechanism (130), the first part (122) is attached to the filter element (110), and the second part (124) is releasably attachable to the housing (200) and configured for positioning the filter assembly (100) within the housing (200).

## Description

### Technical Field

The present disclosure relates to a filter assembly. More particularly, the present disclosure relates to a filter assembly suitable for filtering compressed air, and a kit and adapter for the same and an air treatment system with the same.

### Background

Considering air treatment, compressed air is filtered to remove particles, aerosols, and vapours. Flow dynamics through the filter to maximise filtration efficiency while at the same time have a minimal pressure drop is a technical problem. The end cap in some filter elements is large and contains a lot of material. When a filter element is exchanged, then the whole filter element is discharged, including the end cap. This results in a lot of waste. It is desirable to reduce waste and support circular economy. It is desirable to lower the carbon footprint and to make a positive impact on the environment.

It is preferred that any solution must be compatible with already existing filtration assemblies and systems. In addition hereto and the environmental aspects, improving filtration efficiency and reducing pressure loss is desirable for the already existing filtration assemblies and systems.

A further technical problem is that any part of the filter assembly must function without a possibility to fail, fulfil technical and legal requirements, and be easy to use. Safety is an issue. It is desirable that any solution is simple, not expensive to produce, and is reliable. It is further a technical problem to avoid cumbersome arrangements that are expensive to manufacture or assemble. EP2129448 and WO9930799 may be useful for understanding the background of the invention.

### Summary of the Invention

It is an object of the present invention to provide a filter assembly, an adapter for use in the filter assembly, and a kit for the filter assembly. This object can be achieved by the features as defined by the independent claim. Further enhancements are characterized by the dependent claims. The invention is defined by the claims.

According to one embodiment, a filter assembly for filtering a fluid comprises a filter element 110 with an end cap 120, the end cap 120 being configured for guiding the fluid to the filter element 110 and positioning the filter 100 in a housing 200. The end cap 120 comprises a first part 122 and a second part 124 releasably connectable to each other by an interlocking mechanism 130, the first part 122 is attached to the filter element 110, and the second part 124 is releasably attachable to the housing 200 and configured for positioning the filter assembly 100 within the housing 200.

The second part 124 may comprise an outer circumferential edge 140, the outer circumferential edge 140 may comprise an attachment mechanism 142 for releasably attach the second part 124 to the housing 200. The attachment mechanism 142 may comprise one or more openings 144. The interlocking mechanism 130 may be within, and substantially in the same plane as, the attachment mechanism 142.

The end cap 120 may further comprise a sealing element 128 for sealing between the first part 122 and the second part 124. The interlocking mechanism 130 may comprise a bayonet connection, a bayonet lock, a threaded connection, a screw connection, or clamps and/or clips.

The filter element 110 may be substantially shaped as a hollow cylinder, and the first part 122 and the second part 124 may comprise openings for guiding the fluid to the filter element 110. The openings may be central and co-axial openings for guiding the fluid to an inside of the filter element 110.

The second part 124 may comprise a partly circumferential thread 142 for positioning the filter assembly 100. The partly circumferential thread 142 may have a larger circumference then the filter element 110.

The filter element 110 may comprise a second end cap 150. The filter element 110 may be arranged between the first part 122 and the second end cap 150.

According to one embodiment, an adapter, for a filter assembly, comprises an interlocking mechanism 130 configured to releasably connect the adapter to a first part 122; an outer circumferential edge 140 comprising an attachment mechanism 142 for releasably attach the adapter 124 to a housing 200, the attachment mechanism 142 comprising one or more openings 144; and the interlocking mechanism 130 is within, and substantially on the same plane as, the attachment mechanism 142.

According to one embodiment, a kit comprises the filter assembly according to any one of the embodiments described herein. The kit comprises on one hand the filter element 110 and the first part 122 attached to the filter element 110 according to any one of the preceding claims; and on the other hand the second part 124 according to any one of the preceding claims.

According to one embodiment, a kit comprises the filter assembly according to any one of the embodiments described herein. The kit comprises on one hand a first part (122) attached to a filter element (110); and on the other hand a second part (124) being releasably attachable to a housing (200) and configured for positioning the filter assembly (100) within the housing (200); wherein the first part (122) and the second part (124) are releasably connectable to each other by an interlocking mechanism (130).

The second part (124) may comprise an outer circumferential edge (140), the outer circumferential edge (140) may comprise an attachment mechanism (142) for releasably attach the second part (124) to the housing (200). The attachment mechanism (142) may comprise one or more openings (144). The interlocking mechanism (130) may be within, and substantially in the same plane as, the attachment mechanism (142).

According to one embodiment, an air treatment system comprising the filter assembly according to any one of the embodiments described herein is disclosed. Such an air treatment system may comprise a compressor for compressing air and subsequently filtering the compressed air, according to any one of the embodiments described herein.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed embodiment may be technically combined with any other claimed embodiment or embodiments.

### Brief Description of the Drawings

The accompanying drawings illustrate presently exemplary embodiments of the disclosure and serve to explain, by way of example, the principles of the disclosure.
Fig 1 is a diagrammatic illustration of a filter assembly, in a housing, according to an exemplary embodiment of the disclosure;
Fig 2 is a diagrammatic illustration of a filter assembly according to an exemplary embodiment of the disclosure;
Fig 3 is a diagrammatic illustration of a filter assembly according to an exemplary embodiment of the disclosure;
Fig 4 is a diagrammatic illustration of a filter element according to an exemplary embodiment of the disclosure; and
Figs 5 and 6 are diagrammatic illustrations of a part of the end cap of a filter assembly according to an exemplary embodiment of the disclosure.

### Detailed Description

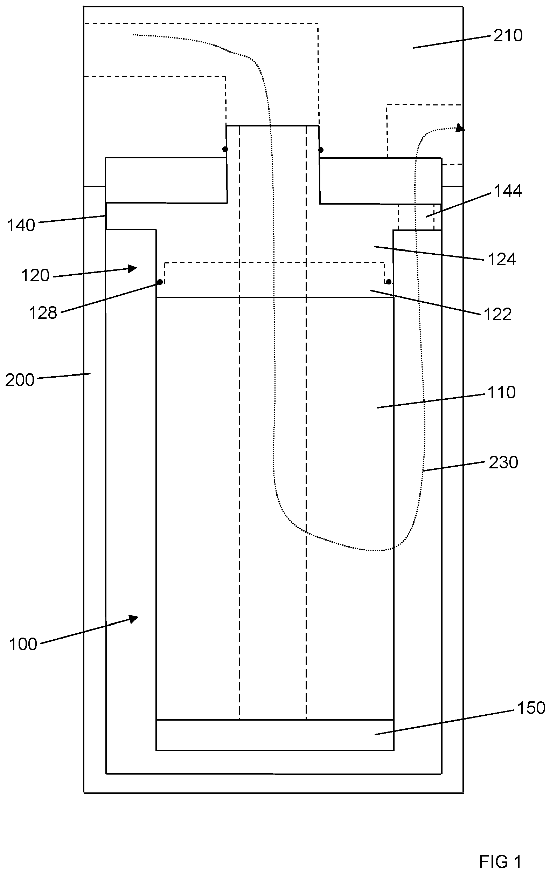

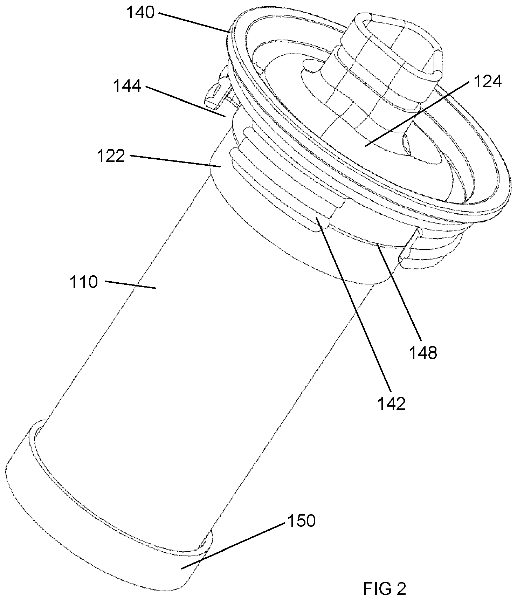

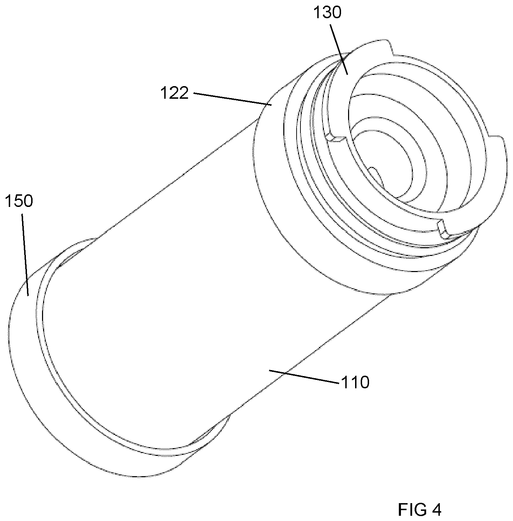

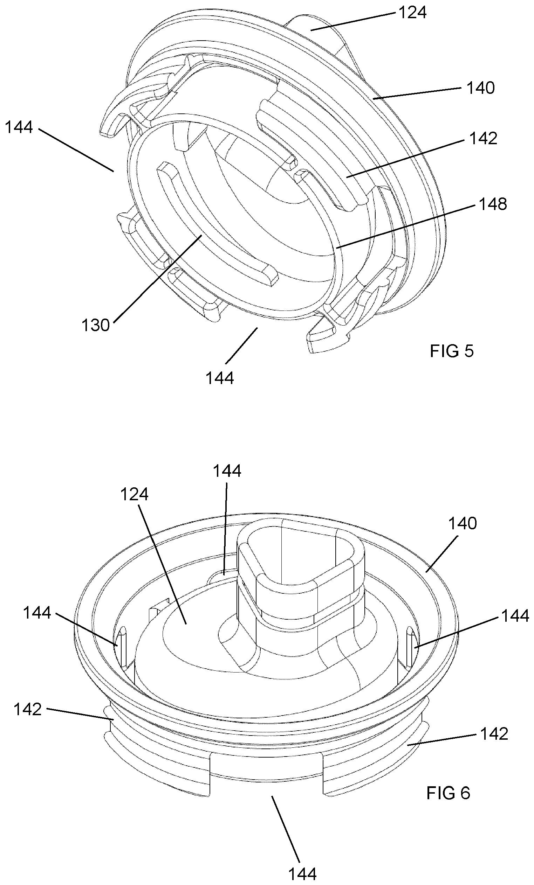

Figure 1 is a diagrammatic illustration of a filter assembly 100, in a housing 200, according to an exemplary embodiment of the disclosure. Here the flow from the head 210 to the filter assembly 100 is concentric with the filter element 110. However, as shown in figures 2 to 6, the end cap 120 may be non-concentric with the filter element 110. Figure 1 is a very schematic diagrammatic illustration, while Figures 2 to 6 are more detailed diagrammatic illustrations. The filter element 110 may comprise a coalescence filter or an activated carbon filter.

Figure 1 illustrates schematic how the filter assembly 100 is mounted in a housing 200. Figure 1 shows the principals how the filter assembly 100 may be used for filtering a fluid. The filter assembly 100 has an end cap 120 that releasably connects the filter assembly 100 to a housing 200 and to a head 210. A fluid may flow as illustrated by the dotted arrow 230 through the head 210, into and through the end cap 120, into the filter element 110, out from the filter element 110, and back up out through the head 210. The fluid may for example be air, such as compressed air, and the filter element 110 may for example be for filtering out particles, aerosols, and vapours from the air. The end cap 120 comprises a first part 122 and a second part 124 releasably connectable to each other. A sealing element 128, such as for example an O-ring, may be used for sealing between the first part 122 and the second part 124. The housing 200 may be shaped as a bowl 200 that surrounds the filter element 110. The housing 200 may be attachable to the head 210. The end cap 120 may connect to the head 210 for directing the flow of fluid to the filter element, and the end cap 120 may also connect to the housing 200 to position the filter element 110 in the housing 200. The housing 200 may be substantially shaped as a hollow cylinder with one end closed and the other end releasable connected to the head 210. The filter element 110 may be, in normal usage, arranged as illustrated in figure 1. That is, the filter element 110 may be shaped substantially as a hollow cylinder with the axis of the hollow cylinder being substantially aligned with gravity, and the end cap 120 being above the filter element 110.

Turning to figures 2 to 6, the filter assembly 100 is shown. The filter assembly in figures 2 to 6 is in principal almost similar to that one in figure 1. A filter assembly for filtering a fluid, preferably compressed air, is shown. The filter assembly 100 comprises a filter element 110 with an end cap 120. The end cap 120 is configured for guiding the fluid to the filter element 110 and positioning, holding, the filter 100 in a housing 200. The end cap 120 comprises a first part 122 and a second part 124 releasably connectable to each other by an interlocking mechanism 130. This allows the first part 122 and the second part 124 to be connected to each other and to be disconnected from each other. The first part 122 is attached to the filter element 110. The second part 124 is releasably attachable to the housing 200 and configured for positioning the filter 100 within the housing 200. This allows the filter element 100 with the first part 122 to be exchanged while the second part 124 can be reused. Preferably the first part 122 is permanently attached to the filter element 110. Preferably only the second part 124 is releasably attachable to the housing 200 and only the second part 124 is configured for positioning the filter assembly 100 within the housing 200. It is preferred that the second part 124 alone releasably attaches to, and positions the filter assembly in, the housing 200.

Figures 2, 3, 5, and 6 illustrate that the second part 124 may comprise an outer circumferential edge 140. The outer circumferential edge 140 may comprise an attachment mechanism 142 for releasably attach the second part 124 to the housing 200. The attachment mechanism 142 may be threads, a snap connection, or a bayonet connection. The attachment mechanism 142 may comprising one or more openings 144. This allows for a secure and reliable positioning of the filter assembly 100 within the housing 200. It also allows for the filter element 100 with the first part 122 to be exchanged when the filter needs changing, while the second part 124 can be reused. The one or more openings 144 may open up, remove, parts of the attachment mechanism 142. The one or more openings 144 may allow fluid to pass through the second part 124 and the attachment mechanism 142. For example, a circumferential thread 142 may be interrupted with the one or more openings 144. Viewed in the circumferential direction, the one or more openings 144 may be substantially equal, or larger, in distance to the attachment mechanism 142.

Figures 2, 3, 5, and 6 show four openings 144, but there may be one, two, three, five, six, seven, or eight openings. These openings allow for a better flow of fluid and therefore reduces pressure loss. As illustrated, the attachment mechanism 142 may have a substantial T-shaped form, as a segment with the attachment mechanism 142 on the outside and the leg of the T attached to an inner ring 148 of the second part 124. The inner ring 148 may support the attachment mechanism 142 on its outside and support the interlocking mechanism 130 on its inside.

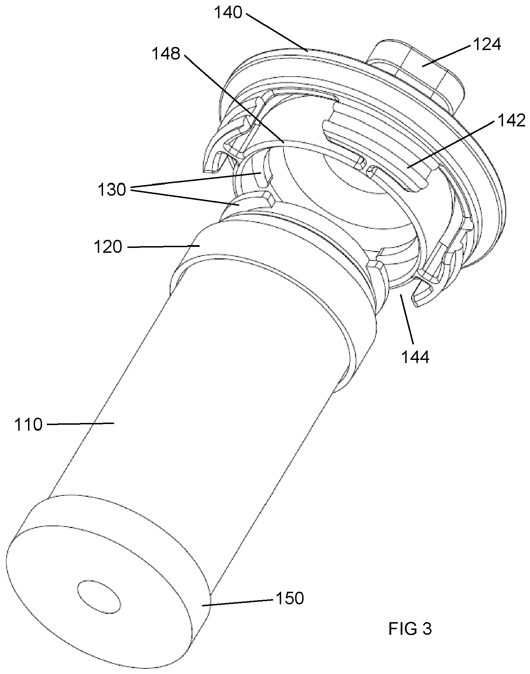

As illustrated in the figures, the interlocking mechanism 130 may be within, and substantially in the same plane as, the attachment mechanism 142. This is to be understood such that the attachment mechanism 142 and the interlocking mechanism 130 are substantially in the same radial plane in relation to a central axis of the filter assembly. This configuration allows the filter element 100 to be larger since the interlocking mechanism 130 and the attachment mechanism 142 are in the same plane, rendering the end cap 120 compact. For example, figure 3 shows how the interlocking mechanism 130 is inside the attachment mechanism 142. This improves the filtration efficiency since there is more space for a large filter element 100.

As may be best taken from figure 1, the end cap 120 may further comprise a sealing element 128 for sealing between the first part 122 and the second part 124. The sealing element 128 may be an O-ring. This forces the fluid to pass through the filter and frequent reuse of the second part 124.

As may best be taken from figures 2 to 5, the interlocking mechanism 130 may comprise a bayonet connection. For example, two radial protrusions opposite each other on the first part 122 and the second part 124 allows for a quick and reliable connection with a simple 90 degree relative twist. The bayonet connection may be a fastening mechanism comprising of a cylindrical male side with one or more radial protrusions 130 and a female receptor with matching protrusions 130 with openings to allow the two parts to be locked together.

While the bayonet connection has been illustrated, the interlocking mechanism 130 may comprise a threaded connection, such as a threaded screw connection. For example, the first part 122 may comprise a thread facing outwards in a radial direction, while the second part 124 may comprise a complimentary thread facing inwards in a radial direction. This would allow the first part 122 and the second part 124 to be screw connected to each other. The screw threads may have two, three, or four starts. In one embodiment, the interlocking mechanism 130 may comprise clamps and/or clips. The first part 122 and the second part 124 may be snap fitted to each other, or a clamp mechanism may be used to clamp them together. For example, a latch clamp may be used. Clips may for example be flexible elements that can snap into a locking position, a form shaped fitting, and interlock the first part 122 and the second part 124.

The figures illustrate a preferred embodiment wherein the filter element 110 is substantially shaped as a hollow cylinder, and the first part 122 and the second part 124 comprise openings for guiding the fluid to the filter element 110. The openings may be central and co-axial openings for guiding the fluid to an inside of the filter element 110, as illustrated with the flow of fluid by the dotted arrow 230 in figure 1.

As illustrated in figures 2, 3, 5, and 6, the second part 124 may comprise a partly circumferential thread 142 for positioning the filter assembly 100. The partly circumferential thread 142 may have a larger circumference, or a larger radius, then the filter element 110. This allows for a secure positioning and reduced pressure loss of the air treatment.

The filter element 110 may comprises a second end cap 150. This is best illustrated in figures 1 to 4. The filter element 110 may be arranged between the first part 122 and the second end cap 150. The second end cap 150 may close of the hollow cylindrical filter element 110 at one end, while the end cap 120 may guide, directly from the head 210, fluid towards the centre of the hollow cylindrical filter element 110 at the other, opposite, end.

According to one embodiment, an adapter 124 is disclosed. This adapter is to be used in a filter assembly, preferably the filter assembly according to any one of the embodiments disclosed herein, wherein the adapter is only the second part 124. Such an adapter makes it possible to replace the filter element 110 frequently, without having to replace the adapter 124. The adapter 124, the second part 124, may be reused several times. The adapter may be configured to be reused for up to one hundred times.

The figures illustrate an adapter for a filter assembly, preferably the filter assembly disclosed herein. The adapter 124 comprises an interlocking mechanism 130 and an outer circumferential edge 140 with an attachment mechanism 142, as described herein. The interlocking mechanism 130 is configured to be releasably connect the adapter 124 to a first part, preferably the first part 122. The outer circumferential edge 140 comprising an attachment mechanism 142 for releasably attach the adapter 124 to a housing 200, the attachment mechanism 142 comprising one or more openings 144. The interlocking mechanism 130 is within, and substantially on the same plane as, the attachment mechanism 142. Reference is made to the description of the second part 124 that may be regarded as an adapter 124 for attaching the filter element 110 to a housing 200.

According to one embodiment, a kit comprising the filter assembly described herein is disclosed. The kit comprises on one hand the filter element 110 and the first part 122 attached to the filter element 110, as described herein. The kit comprises on the other hand the second part 124, as described herein. This allows the filter element 110 and the first part 122 attached to the filter element 110 to be handled separately, for example, sold and stored, independently of the second part 124. This also allows the second part 124 be handled separately, for example, sold and stored, independently of filter element 110 and the first part 122. This gives the possibility to reuse the second part 124 several times, even if the filter element 110 must be discharged each time the filter element 110 needs to be changed.

As illustrated in the figures, a kit may comprise the filter assembly according to any one of the embodiments described herein. The kit may comprise on one hand a first part 122 attached to a filter element 110; and on the other hand a second part 124 being releasably attachable to a housing 200 and configured for positioning the filter assembly 100 within the housing 200. The first part 122 and the second part 124 are releasably connectable to each other by an interlocking mechanism 130. In one embodiment, the second part 124 may comprise an outer circumferential edge 140, the outer circumferential edge 140 comprising an attachment mechanism 142 for releasably attach the second part 124 to the housing 200, the attachment mechanism 142 comprising one or more openings 144. The interlocking mechanism 130 may be within, and substantially in the same plane as, the attachment mechanism 142. This has also been disclosed earlier herein.

According to one embodiment, an air treatment system comprises the filter assembly described herein. Such an air treatment system may comprise a compressor for compressing air and subsequently filtering the compressed air, according to any one of the preceding embodiments. For example, the air treatment system may comprise a compressor, the housing 200, the head 210, and the filter assembly. The air treatment system may further include valves, sensors, and fluid conduits.

This written description uses examples to disclose the invention, including the best mode, and also to enable any person skilled in the art to practice the invention, including making and using the filter assembly and performing the methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A filter assembly for filtering a fluid comprising
a filter element (110) with an end cap (120), the end cap (120) being configured for guiding the fluid to the filter element (110) and positioning the filter (100) in a housing (200);
wherein the end cap (120) comprises a first part (122) and a second part (124) releasably connectable to each other by an interlocking mechanism (130), the first part (122) is attached to the filter element (110), and the second part (124) is releasably attachable to the housing (200) and configured for positioning the filter assembly (100) within the housing (200).

2. The filter assembly according to claim 1, wherein the second part (124) comprises an outer circumferential edge (140), the outer circumferential edge (140) comprising an attachment mechanism (142) for releasably attach the second part (124) to the housing (200), the attachment mechanism (142) comprising one or more openings (144).

3. The filter assembly according to claim 2, wherein the interlocking mechanism (130) is within, and substantially in the same plane as, the attachment mechanism (142).

4. The filter assembly according to any one of the preceding claims, wherein the end cap (120) further comprises a sealing element (128) for sealing between the first part (122) and the second part (124).

5. The filter assembly according to any one of the preceding claims, wherein the interlocking mechanism (130) comprises a bayonet connection.

6. The filter assembly according to any one of the preceding claims, wherein the interlocking mechanism (130) comprises a threaded connection.

7. The filter assembly according to any one of the preceding claims, wherein the interlocking mechanism (130) comprises clamps and/or clips.

8. The filter assembly according to any one of the preceding claims, wherein the filter element (110) is substantially shaped as a hollow cylinder, and the first part (122) and the second part (124) comprise openings for guiding the fluid to the filter element (110).

9. The filter assembly according to any one of the preceding claims, wherein the second part (124) comprises a partly circumferential thread (142) for positioning the filter assembly (100), the partly circumferential thread (142) having a larger circumference then the filter element (110).

10. The filter assembly according to any one of the preceding claims, wherein the filter element (110) comprises a second end cap (150), the filter element (110) being arranged between the first part (122) and the second end cap (150).

11. An adapter for a filter assembly, wherein the adapter comprises
an interlocking mechanism (130) configured to releasably connect the adapter to a first part (122);
an outer circumferential edge (140) comprising an attachment mechanism (142) for releasably attach the adapter (124) to a housing (200), the attachment mechanism (142) comprising one or more openings (144); and
the interlocking mechanism (130) is within, and substantially on the same plane as, the attachment mechanism (142).

12. A kit comprising the filter assembly according to any one of the preceding claims, the kit comprising
on one hand the filter element (110) and the first part (122) attached to the filter element (110) according to any one of the preceding claims; and
on the other hand the second part (124) according to any one of the preceding claims.

13. A kit comprising the filter assembly according to any one of the preceding claims, the kit comprising
on one hand a first part (122) attached to a filter element (110);
on the other hand a second part (124) being releasably attachable to a housing (200) and configured for positioning the filter assembly (100) within the housing (200);
wherein the first part (122) and the second part (124) are releasably connectable to each other by an interlocking mechanism (130).

14. The kit according to claim 13, wherein the second part (124) comprises an outer circumferential edge (140), the outer circumferential edge (140) comprising an attachment mechanism (142) for releasably attach the second part (124) to the housing (200), the attachment mechanism (142) comprising one or more openings (144); and wherein the interlocking mechanism (130) is within, and substantially in the same plane as, the attachment mechanism (142).

15. An air treatment system comprising the filter assembly according to any one of the preceding claims.
